Europäisches Patentamt

**European Patent Office** (11) Veröffentlichungsnummer: **0 184 094**

Office européen des brevets **B1**

(12) **EUROPÄISCHE PATENTSCHRIFT**

(45) Veröffentlichungstag der Patentschrift:
15.11.89

(21) Anmeldenummer: **85114902.1**

(22) Anmeldetag: **25.11.85**

(51) Int. Cl.⁴: **B 32 B 27/32**

(54) Siegelfähige, transparente polyolefinische Mehrschichtfolie.

---

(30) Priorität: **04.12.84 DE 3444158**

(43) Veröffentlichungstag der Anmeldung:
**11.06.86 Patentblatt 86/24**

(45) Bekanntmachung des Hinweises auf die Patenterteilung:
**15.11.89 Patentblatt 89/46**

(84) Benannte Vertragsstaaten:
**BE DE FR GB IT NL**

(56) Entgegenhaltungen:
**EP-A-0 114 312**
**EP-A-0 135 178**
**FR-A-2 438 601**

(73) Patentinhaber: **HOECHST AKTIENGESELLSCHAFT,
Postfach 80 03 20, D-6230 Frankfurt am Main 80
(DE)**

(72) Erfinder: **Crass, Günther, Bachstrasse 7, D-6204
Taunusstein 4 (DE)**
Erfinder: **Bothe, Lothar, Dr., Am Heiligenhaus 9,
D-6500 Mainz- Gonsenheim (DE)**
Erfinder: **Janocha, Siegfried, Dr., Weinfeldstrasse
28, D-6200 Wiesbaden (DE)**

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

**Beschreibung**

Die Erfindung bezieht sich auf eine siegelfähige, transparente polyolefinische Mehrschichtfolie, bestehend aus einer Basisschicht aus einem Propylenpolymeren und einer siegelfähigen Oberflächenschicht, die aus einem Copolymeren aus Propylen- und Ethylen- oder Buten-1-Einheiten und/oder einem Terpolymeren aus Ethylen-, Propylen- und Buten-1-Einheiten besteht.

Folien dieser Art werden als Verpackungsfolien in horizontalen Form-Füll-Schließ-Maschinen eingesetzt. Hierzu wird die zunächst als fläche Bahn in die Maschine einlaufende Folie um ihre Längsachse gebogen, wobei das zu verpackende Gut von der Folie umhüllt wird, und zu einer schlauchförmigen Hülle geformt. Die siegelbare Oberflächenschicht bildet die Innenseite des Schlauches. Die Randzonen der Folie werden aufeinander gebracht, so daß Innenseite an Innenseite anliegt. Durch Wärmeeinwirkung entsteht eine von der schlauchförmigen Verpackung abstehende, parallel zur Schlauchlängsachse sich erstreckende streifenförmige Siegelnaht ("fin seal"). Zur Portionierung des eingefüllten Gutes und Herstellung einzelner Packungen werden im Abstand zueinander und quer zur Schlauchlängsachse sich erstreckende Siegelnähte angebracht, und die Schlauchhülle in diesen Quernähten quer zur Hüllenlängsachse durchtrennt.

Für diese Anwendung haben sich übliche Folien auf Basis von Polypropylen als wenig geeignet erwiesen. Insbesondere in modernen, schnellaufenden Form-Füll-Schließ-Maschinen, in denen die Folie in horizontaler Richtung mit einer Geschwindigkeit von größer als 40 m/min geführt wird, muß die Folie besonders gute Maschinengängigkeit und Gleiteigenschaften aufweisen.

Aus der EP-B-0 008 904 ist eine siegelfähige, transparente polyolefinische Mehrschichtfolie bekannt geworden, die als Verpackungsfolie in schnell-laufenden Form-Füll-Schließ-Maschinen Anwendung finden soll. Sie besteht aus einer Basisschicht aus einem Propylenpolymeren und zwei siegelbaren Oberflächenschichten aus Copolymeren von Ethylen mit Propylen bzw. Ethylen mit Buten-1. Diese Folie muß aber, sofern sie zur Verbesserung ihrer Bedruckbarkeit coronabehandelt werden soll, weitere Zusätze an Gleitmitteln enthalten, was aber ihre optischen Eigenschaften wie Glanz und Trübungsgrad negativ beeinflußt.

Die siegelfähige, transparente polyolefinische Mehrschichtfolie der EP-A-0 114 312 besteht aus einer Basisschicht aus einem Propylenpolymeren und mindestens einer siegelfähigen Schicht, welche ein Polyolefinharz ein niedrigmolekulares, mit dem Polyolefinharz verträgliches Harz, ein Propylenhomopolymer und ein Polydiorganosiloxan enthält. Sie soll ebenfalls als Verpackungsfolie auf horizontalen Form-Füll-Schließ-Maschinen eingesetzt werden und zeigt auch gute Verarbeitungseigenschaften auf schnellaufenden Verpackungsmaschinen. Diese Mehrschichtfolie erfüllt zwar die Anforderungen, die maschinentechnisch an eine Verpackungsfolie gestellt werden, doch ist die Handhabung der Folie durch ihre relativ glatte Oberfläche problematisch. So resultiert beim Schneiden dieser Folien von der 4 bis 6 m breiten Originalrolle auf kleinere Breiten ein erhöhter seitlicher Verlauf. Durch dieses seitliche Versetzen der wiederaufgewickelten Folie mit verkleinerter Breite erhält der neue Wickel nicht die exakte Breite entsprechend der Breite der abgeschnittenen Folienbahn. Auch besteht bei der aufgewickelten Folie eine starke Neigung, daß aufeinanderliegende Folienlagen von der Rolle parallel zur Rollenachse seitlich wegrutschen, was unter dem Begriff des Teleskopierens bekannt ist. Dieser Effekt hat zur Folge, daß die Ränder der Folie im Wickel nicht mehr exakt übereinander liegen, sondern in einem geringen Abstand seitlich gegeneinander versetzt sind. Bedingt durch diese Schwierigkeiten muß beim Schneide- und Aufwickelvorgang die Maschinengeschwindigkeit stark reduziert werden, wodurch sich die Kosten für die Folienkonfektionierung stark erhöhen. Zur Vermeidung dieses Nachteils wird nach DE-A-3 331 983 der siegelbaren Oberflächenschicht blattförmiges Silikat zugegeben.

Wie sich allerdings herausgestellt hat, lassen sich diese Folien nur für solche Anwendungen gebrauchen, bei denen die Folie völlig transparent sein soll, um den Inhalt vollständig sichtbar werden zu lassen. Häufig wird allerdings verlangt, daß die Verpackungsfolie mit einem Aufdruck zu versehen ist. In diesen Fällen ist es erforderlich, die Folie einer Coronabehandlung zu unterwerfen, um ihre Bedruckbarkeit zu ermöglichen. Mit diesem Verfahren wird die Oberflächenspannung der Folie erhöht und dadurch die Haftung zwischen Folienoberfläche und Druckfarbe verbessert. Diese Vorbehandlung hat aber den großen Nachteil, daß die guten Laufeigenschaften dieser Folien auf schnellaufenden Verpackungsmaschinen verloren gehen.

Die FR-A-2 438 601 beschreibt eine bedruckbare, siegelfähige Polypropylenfolie, bei der sowohl in der Basisschicht wie in der siegelfähigen Schicht Gleitmittel und Antiblockmittel enthalten sein können. Diese Folie ist allerdings im Hinblick auf ihre optischen Eigenschaften und bezüglich ihrer Kratzfestigkeit noch verbesserungswürdig.

Der vorliegenden Erfindung liegt deshalb die Aufgabe zugrunde, eine siegelbare transparente polyolefinische Mehrschichtfolie anzugeben, die sich problemlos konfektionieren läßt, ohne daß Gefahr des Teleskopierens beim Aufwickeln besteht, die gute Verarbeitungseigenschaften auf schnell-laufenden Verpackungsmaschinen, insbesondere horizontalen Form-Füll-Schließ-Maschinen, zeigt, die außerdem gute optische Eigenschaften und hohe Kratzfestigkeit aufweist und insbesondere einwandfreie Bedruckbarkeit gewährleistet.

Diese Aufgabe wird gelöst durch die in Anspruch 1 angegebene Mehrschichtfolie. Die Unteransprüche geben besondere Ausführungsformen der Folie an.

Im Gegensatz zu den eingangs genannten Mehrschichtfolien besteht die Mehrschichtfolie der Erfindung nur aus einer siegelfähigen Oberflächenschicht, während die andere Oberflächenschicht aus dem Polymeren der Basisschicht aufgebaut ist. Wird diese nichtsiegelfähige Oberflächenschicht coronabehandelt, so treten überraschenderweise nicht die bei der Coronabehandlung von siegelfähigen Oberflächenschichten festgestellten negativen Veränderungen der Folie ein.

Wie weiterhin überraschenderweise festgestellt wurde, zeigt eine nur zweischichtige Folie aus Basisschicht und einer einzigen, siegelfähigen Oberflächenschicht nicht den mit der Erfindung angestrebten Erfolg, wenn analog zur Erfindung die nichtsiegelfähige Folienoberfläche, in diesem Fall die Basisschicht, coronabehandelt wird und die Basisschicht die gleichen Additive enthält wie die nichtsiegelfähige Oberflächenschicht nach der Erfindung. Ihre Maschinengängigkeit und auch ihre optischen Eigenschaften und ihre Kratzfestigkeit sind deutlich schlechter als bei der dreischichtigen Folie nach der Erfindung.

Das Propylenpolymere der Basisschicht der Mehrschichtfolie ist ein für diesen Zweck übliches Polymeres z. B. ein Homopolymer, insbesondere isotaktisches Polypropylen mit einem in n-Heptan löslichen Anteil von maximal 15 Gew.-%, oder ein Copolymer des Propylens mit Ethylen oder $C_4$- bis $C_8$-$\alpha$-Olefinen mit mindestens 90 Gew.-% Propylenanteil. Das Propylenpolymere der Basisschicht hat zweckmäßigerweise einen Schmelzflußindex von 0,5 bis 8, insbesondere 1,5 bis 4 g/10 min bei 230°C und 2,16 kg Belastung (DIN 53 735) und einen Schmelzpunkt von mindestens 140°C, vorzugsweise 150°C oder höher. Außer der Basisschicht ist auch die nichtsiegelfähige Oberflächenschicht aus dem Propylenhomopolymer aufgebaut. Auch kann die siegelbare Oberflächenschicht Propylenhomopolymer als Zusatz enthalten. Die Basisschicht kann außer dem Propylenpolymeren noch ein antistatisches Mittel enthalten, wobei langkettige, aliphatische tertiäre Amine, deren aliphatischer Rest eine C-Kettenlänge von $C_{12}$ bis $C_{18}$ aufweist und die mit zwei Hydroxyalkyl-($C_1$-$C_4$)-Gruppen substituiert sind, besonders geeignet sind. Diese antistatischen Mittel sind beispielsweise in der US-A-4 230 767 beschrieben. Ein Zusatz von 0,1 bis 0,4 Gew.-% ist ausreichend. Besonders bevorzugt sind N,N-Bis-(2-hydroxyethyl)-($C_{12}$-$C_{18}$)-alkyl-amine. Weitere Zusätze zur Verbesserung der Gleiteigenschaften, wie Gleit- und Antiblockmittel in der Basisschicht ergeben praktisch keinen zusätzlichen Effekt hinsichtlich der Maschinengängigkeit der Mehrschichtfolie.

Die Siegelanspringtemperatur soll im Hinblick auf die Verwendung der Mehrschichtfolie in Form-Füll-Schließ-Maschinen relativ niedrig sein und 100°C nicht überschreiten. Die Siegelanspringtemperatur ist die minimale Siegeltemperatur, bei der die Siegelnahtfestigkeit einen Wert von 0,5 N/15 mm Streifenbreite erreicht.

Ein geeignetes Polyolefinharz für eine solche siegelfähige Oberflächenschicht umfaßt ein Copolymeres aus Propylen- und Ethylen- oder Propylen- und Buten-1-Einheiten. Geeignete Copolymere aus Ethylen- und Propylen-Einheiten enthalten 3 bis 10 Gew.-% Ethylen-Einheiten, aus Propylen- und Buten-1-Einheiten 5 bis 40 Gew.-% Buten-1-Einheiten. Geeignete Polyolefinharze für die siegelfähige Oberflächenschicht umfassen auch Terpolymere aus Ethylen-, Propylen- und Buten-1-Einheiten mit einem Anteil von mindestens 80 Gew.-% Propylen-Einheiten. Der Schmelzpunkt der siegelfähigen Oberflächenschicht liegt bei 130°C oder höher, der Schmelzflußindex des Polyolefinharzes der siegelfähigen Oberflächenschicht liegt im Bereich von 1 bis 16 g/10 min bei 230°C und 2,16 kg Belastung (DIN 53 735).

Besonders vorteilhaft sind Gemische aus den genannten Copolymeren und Terpolymeren, insbesondere aus einem $C_3$/$C_4$-Copolymeren und einem $C_2$/$C_3$/$C_4$-Terpolymeren (Anspruch 3), wie es auch in der EP-A-0 114 312 beschrieben wird. Besonders bei Verwendung dieses speziellen Polymergemisches für die siegelfähige Oberflächenschicht hat sich überraschenderweise gezeigt, daß übliche Zusätze von Gleitmitteln (Polydiorganosiloxan) und/oder Antiblockmitteln (Silikate) in der siegelfähigen Schicht nicht erforderlich sind.

Zur Verbesserung der optischen Eigenschaften und Herabsetzung der Kratzempfindlichkeit der Mehrschichtfolie ist es zweckmäßig, in der siegelfähigen Oberflächenschicht in an sich bekannter Weise 5 bis 15 Gew.-%, bezogen auf die siegelfähige Oberflächenschicht, eines niedrigmolekularen, mit dem siegelfähigen Polyolefinharz verträglichen thermoplastischen Harzes zu verwenden, das einen Erweichungspunkt von 60 bis 180°C, insbesondere 80 bis 130°C (DIN 1995-U4) aufweist. Unter verträglichen Harzen sind solche Harze zu verstehen, die in der angegebenen Konzentration keine Trübung der Mehrschichtfolie bewirken. Als Beispiel für diese Harze sind zu nennen Kohlenwasserstoffharze, Ketonharze, Polyamidharze, Kolophonium, Dammarharze sowie chlorierte aliphatische und aromatische Kohlenwasserstoffharze. Der Zusatz dieser Harze zu einer polyolefinischen siegelfähigen Oberflächenschicht wird in der EP-A-0 114 312 beschrieben.

Eine weitere an sich bekannte (EP-A-0 114 312) Möglichkeit zur Verbesserung der optischen Eigenschaften und Kratzfestigkeit, aber auch der Maschinengängigkeit besteht in der Zugabe von 5 bis 15 Gew.-% eines Propylenhomopolymeren zu der siegelfähigen Oberflächenschicht. Geeignete Propylenhomopolymere sind die gleichen, wie sie oben auch für die Basisschicht beschrieben sind. Der Schmelzpunkt des Polypropylens liegt oberhalb des Schmelzpunkts des Polyolefinharzes der siegelfähigen Oberflächenschicht.

Es ist erfindungswesentlich, daß eine zweite nichtsiegelfähige Oberflächenschicht vorhanden ist und diese Schicht - im Gegensatz zur siegelfähigen Schicht und zur Basisschicht - Gleit- und Antiblockmittel enthält. Überraschenderweise hat sich gezeigt, daß die Mehrschichtfolie sowohl in ihrer Maschinengängigkeit als auch in ihrer optischen Wirkung deutlich verbessert wird, wenn das Gleitmittel und das Antiblockmittel nicht in der siegelfähigen Schicht, sondern ausschließlich in der nichtsiegelfähigen Schicht vorhanden sind.

Die nichtsiegelfähige Oberflächenschicht besteht zum überwiegenden Teil aus einem Propylenhomopolymeren mit geringen Mengen von vorzugsweise Polydiorganosiloxan als Gleitmittel und Pigmenten als Antiblockmittel. Unverträgliche Harze, wie sie in der EP-B-27 586 als Antiblockmittel verwendet werden, oder Fettsäureamide als Gleitmittel haben zwar im Hinblick auf die Maschinengängigkeit eine ähnliche Wirkung, jedoch sind Polydiorganosiloxane und Pigmente vorzuziehen, da sie die optischen Eigenschaften der Folie nicht negativ beeinflussen.

Besonders geeignete Propylenhomopolymere wurden oben bei der Beschreibung der Basisschicht erläutert.

Es ist jedoch aus Gründen der Coextrusionstechnik zweckmäßig, daß das Polypropylen der nichtsiegelfähigen Oberflächenschicht einen Schmelzflußindex aufweist, der höher ist als der Schmelzflußindex des Polypropylens der Basisschicht.

Das Polydiorganosiloxan wird in einer Menge von 0,3 bis 2,5 Gew.-%, bezogen auf die nichtsiegelfähige Oberflächenschicht, verwendet und ist vorzugsweise ein Polymethylphenylsiloxan oder Polydimethylsiloxan, insbesondere mit einer kinematischen Viskosität von $10^3$ bis $10^6$, insbesondere 20.000 bis 30.000 $mm^2$/s bei 25°C.

Die nichtsiegelfähige Oberflächenschicht enthält weiterhin 0,1 bis 1 Gew.-% eines anorganischen Pigments, vorzugsweise ein Silikat mit blattförmiger Struktur, welches sich bei der biaxialen Orientierung der Folie überwiegend parallel zur Folienebene ausrichtet. Besonders günstig sind blattförmige Silikate mit einem mittleren Teilchendurchmesser von 0,1 bis 1,0 µm. Diese speziellen Silikate zeigen den Vorteil, daß die Kratzempfindlichkeit der Folie sich nicht erhöht und gleichzeitig das Gleitverhalten der Folie verbessert wird.

Die Dicke der Oberflächenschichten sollte weniger als 3 µm, insbesondere weniger als 1,5 µm betragen, da sich bei größeren Schichtdicken das Verarbeitungsverhalten auf schnellaufenden Verpackungsmaschinen verschlechtert. Die biaxial gereckte Mehrschichtfolie weist vorzugsweise eine Gesamtdicke von 10 bis 50, insbesondere 15 bis 35 µm auf.

Die Herstellung der Formmassen für die Oberflächenschicht und das Zusammenführen der Formmassen mit der Basisschicht erfolgt nach üblichen Verfahren wie Laminierung oder Schmelzextrusion. Beim Coextrusionsverfahren werden die zur Herstellung von siegelfähigen transparenten polyolefinischen Mehrschichtfolien bekannten Streckbedingungen eingehalten. Nach dem üblichen Strecken in Längs- und Querrichtung wird eine Coronaentladung mit üblicher Intensität auf der nichtsiegelfähiget Oberflächenschicht durchgeführt. Hierbei werden elektrische Spannung und Stromstärke so eingestellt, wie sie erforderlich sind, um bei einer vergleichbaren Folie ohne Gleitmittelzusatz (Polysiloxanzusatz) eine Oberflächenspannung von 36 bis 40 mN/m zu erhalten. Eine direkte Messung der Oberflächenspannung der Folie über ihre Benetzbarkeit mit Prüfflüssigkeiten (DIN 53 364) ist in Gegenwart von Polysiloxan nicht möglich.

Die coronabehandelte nichtsiegelfähige Oberflächenschicht nimmt einwandfrei Druckfarbe an. Die Druckfarbe haftet ausgezeichnet auf dieser Oberfläche, wobei sowohl Einkomponenten- wie Zweikomponenten-Druckfarben geeignet sind.

Die Erfindung wird durch das nachfolgende Beispiel näher erläutert. Die Meßwerte wurden nach folgenden Meßverfahren ermittelt:

Schmelzflußindex - DIN 53 735 bei 230°C und 2,16 kg Belastung
Erweichungspunkt - DIN 1935-U4 (Vicat-A)
Schmelzpunkt    - DSC-Messung, Maximum der Schmelzkurve, Aufheizgeschwindigkeit 20°C/min

**Beispiel**

Mit Hilfe des Coextrusionsverfahrens wurde aus einer Breitschlitzdüse von 280 mm Breite und 1,8 mm Spalthöhe bei einer Extrusionstemperatur von 260°C und einer Fördermenge von 70 kg/h als Summe eine 1 mm dicke Mehrschichtfolie extrudiert, die aus einer Basisschicht aus Propylenhomopolymer mit einem Schmelzflußindex von 2 g/10 min und den verschiedenen beiden Außenschichten bestand. Diese Folie wurde nach Durchlaufen einer 20 mm langen Luftstrekke auf einer 30°C warmen Kühlwalze des Durchmessers 600 mm abgeschreckt, die mit einer Umfangsgeschwindigkeit von 4,5 m/min lief. Danach wurde die Folie von der Kühlwalze auf ein Walzentrio von ebenfalls 30°C und einer Umfangsgeschwindigkeit von ebenfalls 4,5 m/min übergeben und dann nach Erwärmung auf 130°C von einem weiteren Walzentrio um den Faktor 5 längs gestreckt. Anschließend wurde sie bei 175°C Lufttemperatur auf das 10 fache in Querrichtung verstreckt.

Die so gebildete Mehrschichtfolie hatte eine Basisschicht aus Polypropylen der Dicke ca. 19 µm, auf jeder Seite eine Deckschicht der Dicke 0,5 bis 0,8 µm. Die nichtsiegelfähige Oberflächenschicht wurde durch Coronabehandlung bedruckbar gemacht.

Die siegelfähige Oberflächenschicht bestand aus

a)      80 Gew.-%, bezogen auf die Siegelschicht, einer Olefinharzzusammensetzung, die sich aus
a1)     50 Gew.-% eines Ethylen-Propylen-Butylen-Terpolymeren, bestehend aus 1,4 Gew.-% Ethylen, 2,8 Gew.-% Butylen und 95,8 Gew.-% Propylen (jeweils bezogen auf das Terpolymere), sowie
a2)     50 Gew.-% eines Propylen-Butylen-Copolymeren, bestehend aus 66,8 Gew.-% Propylen und 33,2 Gew.-% Butylen (bezogen jeweils auf das Copolymere),

zusammensetzt, was einem Gehalt von 0,7 Gew.-% Ethylen, 81,3 Gew.-% Propylen und 18 Gew.-% Butylen entspricht. Die Olefinzusammensetzung $a_1 + a_2$ hatte einen Schmelzflußindex von 8 g/10 min und einen Schmelzpunkt von 150°C;

b)      10 Gew.-%, bezogen auf die Siegelschicht, von ®Arkon P 125, einem hydrierten Kohlenwasserstoffharz mit einem Erweichungspunkt von 125°C als das mit der Olefinharzzusammensetzung verträgliche

4

Harz;

c) 10 Gew.-%, bezogen auf die Siegelschicht, eines Propylen-Homopolymers mit einem Schmelzpunkt von 162° C (®Hostalen PPN 1060 F).

Die nichtsiegelfähige Oberflächenschicht bestand aus

a) 98,8 Gew.-% isotaktischem Propylenhomopolymer ($i_{2, 16}$ = 3,5 g/10 min) mit Schmelzpunkt von 162° C,
b) 0,4 Gew.-% blattförmiges Aluminiumsilikat, mittlere Teilchengröße 0,55 µm,
c) 0,8 Gew.-% Polydimethylsiloxan, kinematische Viskosität 25.000 mm$^2$/s bei 25° C.

Die nachfolgende Tabelle zeigt eine Bewertung der Mehrschichtfolie bei ihrer bestimmungsgemäßen Verwendung auf einer horizontal arbeitenden Form-Füll-Schließ-Maschine im Vergleich zu der aus der EP-A-0 114 312 bekannten Mehrschichtfolie.

Verarbeitungstest auf der horizontal arbeitenden Form- Füll-Schließ-Maschine

| | Abpackgeschwindigkeit | | |
|---|---|---|---|
| | 10 m/min | 20 m/min | 40 m/min |
| Vergleichsbeispiel 1 nach EP-A-0 114 312 (unbedruckbar) | + | + | + |
| Vergleichsbeispiel 2 nach EP-A-0 114 312 (coronabehandelt, bedruckbar) | + | − | − − |
| Beispiel nach der Erfindung | + | + | + |

Wertung der Maschinengängigkeit:
+ völlig störungsfreier Maschinenlauf
− mehr als 3 Störungen/10 min
− − kein kontinuierlicher Folienlauf möglich

## Patentansprüche

1. Siegelfähige, transparente polyolefinische Mehrschichtfolie, bestehend aus einer Basisschicht aus einem Propylenpolymeren und einer siegelfähigen Oberflächenschicht, die aus einem Copolymeren aus Propylen- und Ethylen- oder Buten-1-Einheiten und/oder einem Terpolymeren aus Ethylen-, Propylen- und Buten-1-Einheiten besteht, dadurch gekennzeichnet, daß sie eine nicht siegelfähige Oberflächenschicht mit folgenden Komponenten enthält:

a) 96,5 bis 99,6 Gew.-% eines Propylenhomopolymere,
b) 0,3 bis 2,5 Gew.-% eines Gleitmittels,
c) 0,1 bis 1 Gew.-% eines Antiblockmittels,

jeweils bezogen auf das Gesamtgewicht der nichtsiegelfähigen Oberflächenschicht.

2. Mehrschichtfolie nach Anspruch 1, dadurch gekennzeichnet, daß die nicht siegelfähige Oberflächenschicht als Gleitmittel ein Polydiorganosiloxan enthält.
3. Mehrschichtfolie nach Anspruch 2, dadurch gekennzeichnet, daß das Polydiorganosiloxan ein Polydialkylsiloxan oder ein Polyalkylphenylsiloxan ist.
4. Mehrschichtfolie nach Anspruch 2, dadurch gekennzeichnet, daß das Polydiorganosiloxan ein Polydimethylsiloxan oder Polymethylphenylsiloxan ist mit einer kinematischen Viskosität von 10$^3$ bis 10$^6$ mm$^2$/s (25° C).
5. Mehrschichtfolie nach Anspruch 4, dadurch gekennzeichnet, daß das Polydiorganosiloxan eine kinematische Viskosität im Bereich von 20.000 bis 30.000 mm$^2$/s aufweist.
6. Mehrschichtfolie nach Anspruch 1, dadurch gekennzeichnet, daß die nicht siegelfähige Oberflächenschicht als Antiblockmittel ein anorganisches Pigment enthält.
7. Mehrschichtfolie nach Anspruch 6, dadurch gekennzeichnet, daß das anorganische Pigment ein Silikat ist.
8. Mehrschichtfolie nach Anspruch 7, dadurch gekennzeichnet, daß das Silikat ein blättchenförmiges Silikat ist mit einem mittleren Teilchendurchmesser von 0,1 bis 3 µm.
9. Mehrschichtfolie nach Anspruch 8, dadurch gekennzeichnet, daß das blättchenförmige Silikat einen mittleren Teilchendurchmesser im Bereich von 0,2 bis 1,5 µm aufweist.

10. Mehrschichtfolie nach Anspruch 1, dadurch gekennzeichnet, daß die siegelfähige Oberflächenschicht als Additive

a)      5 bis 15 Gew.-% eines niedrigmolekularen, mit der siegelfähigen Oberflächenschicht verträglichen Harzes und/oder

b)      5 bis 15 Gew.-% eines Propylenhomopolymeren, jeweils bezogen auf die siegelfähige Oberflächenschicht, enthält.

11. Mehrschichtfolie nach Anspruch 1 oder 10, dadurch gekennzeichnet, daß die siegelfähige Oberflächenschicht aus einem Ethylen-Propylen-Buten-1-Terpolymeren und einem Propylen-Buten-1-Copolymeren entsprechend einem Gehalt von 0,1 bis 7 Gew.-% Ethylen, 53 bis 89,9 Gew.-% Propylen und 10 bis 40 Gew.-% Buten-1, bezogen auf das Gesamtgewicht der siegelfähigen Oberflächenschicht, besteht.

12. Mehrschichtfolie nach einem der Ansprüche 1 bis 11, dadurch gekennzeichnet, daß die nicht siegelfähige Oberflächenschicht zur Verbesserung der Bedruckbarkeit coronabehandelt ist.

13. Mehrschichtfolie nach einem der Ansprüche 1 bis 12, dadurch gekennzeichnet, daß sie durch biaxiale Streckung orientiert ist.

## Claims

1. Sealable, transparent polyolefinic multilayer film composed of a base layer comprising a propylene polymer and a sealable surface layer which comprises a copolymer of propylene and ethylene or butene-1 units and/or a terpolymer of ethylene, propylene and butene-1 units, characterized in that it furthermore comprises a second surface layer which is non-sealable and comprises the following components:

a)      from 96.5 to 99.6 % by weight of a propylene homopolymer,

b)      from   0.3 to   2.5 % by weight of a slip agent,

c)      from   0.1 to   1 % by weight of an anti-blocking agent, in each case based on the total weight of the nonsealable surface layer.

2. A multilayer film as claimed in claim 1, characterized in that the slip agent contained in the non-sealable surface layer is a polydiorganosiloxane.

3. A multilayer film as claimed in claim 2, characterized in that the polydiorganosiloxane is a polydialkylsiloxane or a polyalkylphenylsiloxane.

4. A multilayer film as claimed in claim 2, characterized in that the polydiorganosiloxane is a polydimethylsiloxane or a polymethylphenylsiloxane, which has a kinematic viscosity from $10^3$ to $10^6$ mm$^2$/s (25° C).

5. A multilayer film as claimed in claim 4, characterized in that the polydiorganosiloxane has a kinematic viscosity in the range from 20,000 to 30,000 mm$^2$/s.

6. A multilayer film as claimed in claim 1, characterized in that the anti-blocking agent contained in the non-sealable surface layer is an inorganic pigment.

7. A multilayer film as claimed in claim 6, characterized in that the inorganic pigment is a silicate.

8. A multilayer film as claimed in claim 7, characterized in that the silicate is a platelet-shaped silicate having an average particle diameter of 0.1 to 3 µm.

9. A multilayer film as claimed in claim 8, characterized in that the platelet-shaped silicate has an average particle diameter in the range from 0.2 to 1.5 µm.

10. A multilayer film as claimed in claim 1, characterized in that the sealable surface layer contains as additives:

a)      from 5 to 15 % by weight of a low-molecular weight resin which is compatible with the sealable surface layer and/or

b)      from 5 to 15 % by weight of a propylene homopolymer, in each case based on the sealable surface layer.

11. A multilayer film as claimed in claim 1 or claim 10, characterized in that the sealable surface layer comprises an ethylene-propylene-butene-1 terpolymer and a propylene-butene-1 copolymer, corresponding to a content of from 0.1 to 7 % by weight of ethylene, from 53 to 89.9 % by weight of propylene and from 10 to 40 % by weight of butene-1, based on the total weight of the sealable surface layer.

12. A multilayer film as claimed in any of claims 1 to 11, characterized in that the non-sealable surface layer is corona-treated to improve its printability.

13. A multilayer film as claimed in any of claims 1 to 12, characterized in that it is oriented by biaxial stretching.

6

**Revendications**

1. Feuille multicouche polyoléfinique transparente et scellable, qui se compose d'un couche de base en polymères de propène et d'une couche superficielle scellable consistant en un copolymère formé d'unités propène et éthylène ou butène-1 et/ou un terpolymère formé d'unités propène, éthylène et butène-1, caractérisée en ce qu'elle renferme une couche superficielle non-scellable avec les composants suivants:

a)      96,5 à 99,6 % en poids d'un homopolymère de propène,
b)      0,3 à   2,5, % en poids d'un lubrifiant,
c)      0,1 à   1 % en poids d'un antiadhésif,

chaque fois rapporté au poids total de la couche superficielle non-scellable.

2. Feuille multicouche selon la revendication 1, caractérisée en ce que la couche superficielle non-scellable renferme un polydiorganosiloxane comme lubrifiant.

3. Feuille multicouche selon la revendication 2, caractérisée en ce que le polydiorganosiloxane est un polydialkylsiloxane ou un polyalkylphénylsiloxane.

4. Feuille multicouche selon la revendication 2, caractérisée en ce que le polydiorganosiloxane est un polydiméthylsiloxane ou un polyméthylphénylsiloxane de viscosité cinématique $10^3$ à $10^6$ mm$^2$/s (25°C).

5. Feuille multicouche selon la revendication 4, caractérisée en ce que le polydiorganosiloxane a une viscosité cinématique de l'ordre de 20.000 à 30.000 mm$^2$/s.

6. Feuille multicouche selon la revendication 1, caractérisée en ce que la couche superficielle non-scellable renferme comme antiadhésif un pigment inorganique.

7. Feuille multicouche selon la revendication 6, caractérisée en ce que le pigment inorganique est un silicate.

8. Feuille multicouche selon la revendication 7, caractérisée en ce que le silicate est un silicate lamellaire de diamètre particulaire moyen 0,1 à 3 μm.

9. Feuille multicouche selon la revendication 8, caractérisée en ce que le silicate lamellaire a un diamètre particulaire moyen 0,2 à 1,5 μm.

10. Feuille multicouche selon la revendication 1, caractérisée en ce que la couche superficielle scellable contient comme additifs

a)      5 à 15 % en poids d'une résine de bas poids moléculaire compatible avec la couche superficielle scellable et/ou
b)      5 à 15 % en poids d'un homopolymère de propène, dans chaque cas par rapport a la couche superficielle scellable.

11. Feuille multicouche selon les revendications 1 ou 10, caractérisée en ce que la couche superficielle scellable est constituée par un terpolymère éthylène-propène-butène-1 et un copolymère propène-butène-1 selon un rapport pondéral de 0,1 à 7 % d'éthylène, 53 à 89,9 % de propène et 10 à 40 % de butène-1, par rapport au poids total de la couche superficielle scellable.

12. Feuille multicouche selon l'une quelconque des revendications 1 à 11, caractérisée en ce que la couche superficielle non-scellable est traitée par décharge corona pour améliorer son imprimabilité.

13. Feuille multicouche selon l'une quelconque des revendications 1 à 12, caractérisée en ce qu'elle est orientée par étirage biaxial.